# EUROPÄISCHE PATENTSCHRIFT

(11) **EP 0 804 862 B1**
(45) Veröffentlichungstag und Bekanntmachung des Hinweises auf die Patenterteilung: **27.03.2002**
(21) Anmeldenummer: 96946003.9
(22) Anmeldetag: 21.11.1996
(51) Int. Cl.: H05B 41/24, H05B 41/39

(54) **VERFAHREN UND SCHALTUNGSANORDNUNG ZUM BETREIBEN VON KALTKATHODEN-ENTLADUNGSLAMPEN**
PROCESS AND CIRCUIT ARRANGEMENT FOR OPERATING COLD CATHODE DISCHARGE LAMPS
PROCEDE ET CIRCUITERIE POUR FAIRE FONCTIONNER DES LAMPES A DECHARGE A CATHODE FROIDE

(30) Priorität: 21.11.1995 DE 19543419
(43) Veröffentlichungstag der Anmeldung: 05.11.1997
(73) Patentinhaber: Patent-Treuhand-Gesellschaft für elektrische Glühlampen mbH, 81543 München (DE)
(72) Erfinder: ARNDT, Joachim, D-37136 Seulingen (DE); KULLIK, Günter, D-58540 Meinerzhagen (DE)
(86) Internationale Anmeldenummer: DE9602233
(87) Internationale Veröffentlichungsnummer: WO9719574

(56) Entgegenhaltungen:
- EP-A- 0 439 864
- WO-A-83/00271
- US-A- 4 508 996
- US-A- 4 667 133
- US-A- 5 053 681
- US-A- 5 387 845

## Beschreibung

Die Erfindung betrifft ein Verfahren und eine Schaltungsanordnung zum Zünden und Betreiben von Kaltkathoden-Entladungslampen, insbesondere Kaltkathoden-Leuchtstofflampen, gemäß den Oberbegriffen der Ansprüche 1 und 9.

Entladungslampen mit kalter Kathode - also ohne Heizwendel - werden als Leuchtmittel immer dort eingesetzt, wo es auf einen hohen Wirkungsgrad der Lichtausbeute ankommt.

Durch das Fehlen einer Heizwendel eignen sich diese Lampen insbesondere für eine lange Lebensdauer in einer rauhen Umgebung. Durch die Unempfindlichkeit gegenüber Stößen und Erschütterungen sind diese Lampen z.B. vorzüglich im Automobilbau einzusetzen.

Die Bauform dieses Leuchtmittels ermöglicht eine Anwendung auch für ausgefallene Geometrien; so sind z.B. rohrförmige Ausführungen von 3 - 6 mm Außendurchmesser bei einer Länge von einigen Dezimetern bekannt. Die Ausführungen können gebogen, gewendelt oder in Mäandern hergestellt werden.

Zum Start des Entladungsvorganges wird eine hohe Spannung, die bis zu einigen tausend Volt betragen kann, benötigt. Die Brennspannung nach der Zündung kann immer noch einige hundert Volt betragen.

Der erforderliche Brennstrom liegt je nach Ausführung der Lampengeometrié im Bereich 1 bis 20 mA.

Der Start der Lampe erfolgt durch einfaches Anlegen einer hochgespannten Wechselspannung, die - sobald der Zündvorgang abgeschlossen ist, durch den einsetzenden Strom auf die Brennspannung zusammenbrechen darf.

Die Kennlinie der Leuchtintensität in Relation zur Temperatur macht unter gewissen extremen Umgebungsbedingungen ein Nachführen des Lampenbrennstromes erforderlich.

Da diese Kennlinie nicht linear verläuft und sogar Wendepunkte aufweist, ist die Forderung nach einer konstanten Lichtentwicklung im geforderten Temperaturbereich jedoch nur mit großem Aufwand zu realisieren.

Durch den zunehmenden Einsatz der Kaltkathoden-Entladungslampen in der Beleuchtung von Armaturen im Automobilbau werden große Einstellbereiche der Helligkeit verlangt, um so bei wechselnder Umgebungshelligkeit eine entsprechende Abdunklung oder Dimmung der Beleuchtung sicherzustellen. Abdunklungswerte und Dimmraten von bis zu 1 : 1000 werden gefordert.

Die Zündspannungen und Brennströme werden allgemein durch unterschiedliche transformatorische Mittel zur Verfügung gestellt. Bekannt sind Lösungen mit freischwingenden Sperrwandlern oder halbleitergeschalteten Gegentaktwandlern, die sich nach dem Stromsättigungsprinzip selbst steuern und den jeweiligen Betriebsverhältnissen anpassen. Ein Beispiel für eine solche Schaltungsanordnung findet sich in der US-A-50 53 681, wobei hier aus der Wechselspannungsversorgung im Haushalt relativ hochfrequente Betriebsströme zur Speisung von Leuchtstofflampen erzeugt und verteilt werden. Diese Wandler sind aber nur mit sehr hohem Aufwand und schlechtem Wirkungsgrad in dem breiten Spannungsbereich, der im Automobilbau gefordert wird, einzusetzen. Zudem ist die Steuerungsmöglichkeit derartiger Wandler stark begrenzt. Abdunkeln und Dimmen ist nur durch die Veränderung der Spannung möglich. Beispiele hierfür finden sich in der DE-A-42 04 020 und in der WO-A-83 02 537. Die erste Schrift befasst sich mit der Phasenanschnitt-Steuerung von Neonröhren für Leuchtreklamen, während die zweite Schrift ein elektronisches Vorschaltgerät für Gasentladungslampen zum Inhalt hat, bei dem die Helligkeitssteuerung der Lampen durch Veränderung der Betriebsfrequenz erfolgt.

Werden jedoch, wie in einem Beispiel zur Ausleuchtung eines Armaturenbrettes - mehrere Lampen mit unterschiedlicher Geometrie - also unterschiedlichen Zünd- und Brennspannungen eingesetzt und sind die einzelnen Lampen auch noch weit voneinander entfernt angebracht, so wäre für jede Lampe eine eigene Spannungsquelle erforderlich. Eine gemeinsame Dimmung mit dem Ziel, alle Lampen gleichartig synchron und intensitätsgleich abzudunkeln oder aufzuhellen, ist dabei nur mit sehr großem Aufwand und Verlusten oder überhaupt nicht möglich.

Eine größere Zahl frei schwingender Wandler würde mit den unterschiedlichen sich einstellenden Frequenzen bei den unterschiedlichen Betriebszuständen eine hinreichende Entstörung im Hochfrequenzbereich sehr erschweren oder unmöglich machen.

Große Probleme bereitet es auch, mehrere Hochvoltleitungen parallel von einem oder mehreren Wandlern zu den entfernt liegenden Lampen zu führen, insbesondere, wenn die Wechselspannungen im kHz-Bereich gewählt werden und diese eine voneinander abweichende Phasenlage haben.

Aufgabe der Erfindung war es, ein Verfahren und eine Schaltungsanordnung zum Betreiben von Kaltkathoden-Entladungslampen in Kraftfahrzeugen zu schaffen, mit der sich in einfacher Weise die oben aufgeführten Erfordernisse erfüllen lassen, ohne dass dabei die erwähnten Probleme auftreten.

Die Aufgabe wird durch die kennzeichnenden Merkmale der Ansprüche 1 und 9 gelöst. Weitere vorteilhafte Merkmale sind den Unteransprüchen zu entnehmen.

Die vorliegende Erfindung löst diese Probleme und macht die Verteilung der gewonnenen Wechselspannung möglich, stellt die geforderte hohe Dimmrate sicher und bietet die Lösung zur Nachführung der Lichtintensität auch unter den extremen Klima- und Prüfbedingungen der Automobil-Industrie.

Kernidee der neuen Konstruktion ist es, eine frequenz- und spannungsstabile Zwischenwechselspannung mit sinusförmiger Kurvenform zu erzeugen, wobei die Zwischenwechselspannung in einen Spannungsbereich gelegt wird, in dem die Verteilung auf mehrere voneinander getrennte Lampenorte ungefährlich und mit geringen Isolationsmitteln möglich ist. Die Erhöhung der Bordspannung des Kfz oder der jeweiligen Stromquelle auf die Zünd- und Brennspannung der Lampen erfolgt somit in mindestens zwei Stufen. Die Hochsetzung auf die pro Lampe erforderliche Zünd- und Betriebsspannung erfolgt erfindungsgemäß erst in der zweiten Stufe und in unmittelbarer Nähe der Lampenanschlüsse mit Hilfe eines oder mehrerer Ü-bertragersysteme.

Beispiele für die stufenweise Veränderung z.B. der Haushaltsspannung auf die Zünd- und Brennspannung der Lampen finden sich in der WO-A-94 27 419 und der US-A-45 08 996, wobei in diesen Schriften die normale Haushaltsspannung bzw. eine 3-phasige Spannung zunächst gleichgerichtet und als Gleichspannung zu den unterschiedlichen Orten innerhalb eines Anwendungskomplexes geleitet und dort wieder in eine Wechselspannung umgewandelt wird.

Zur Durchführung der ersten Stufe beinhaltet die Schaltungsanordnung einen Hochsetzsteller, der durch einen Synchronisations-Baustein geregelt und gesteuert wird, einen nachgeschalteten Gegentaktwandler, einen Resonanzkreis, der die rechteckige Ausgangsfrequenz des Gegentaktwandlers sinusförmig formt, und einen darauffolgenden Transformator, an dessen belastbarer Sekundärwicklung die gewünschte Zwischenwechselspannung ansteht sowie zur Durchführung der zweiten Stufe einen oder mehrere Übertrager mit jeweils einem Transformator als Kernstück.

Mit Rücksicht auf eine möglichst große Dimmrate und eine hohe Dimmfrequenz oberhalb der Flickerempfindlichkeit des menschlichen Auges wird eine hohe Wandlerfrequenz gewählt, dies ermöglicht zudem den Einsatz kleiner Induktivitäten, was dem Bauraum zugute kommt.

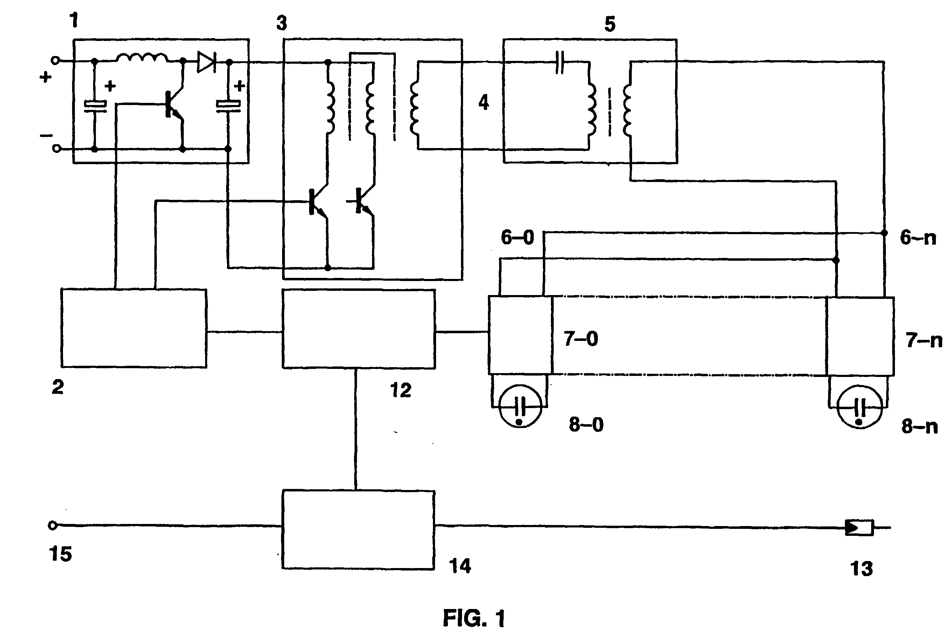

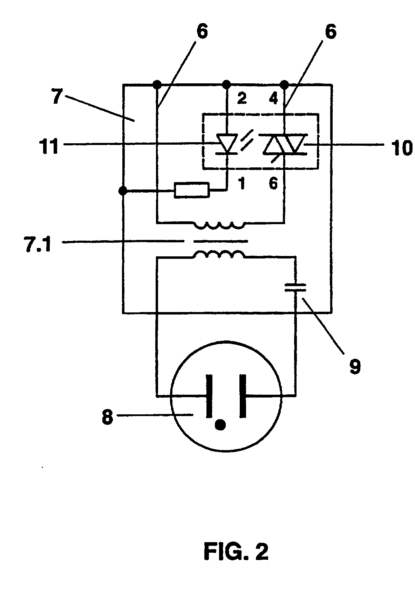

Die Erfindung ist anhand der nachfolgenden Figuren 1 und 2 näher veranschaulicht.

Fig. 1 zeigt in vereinfachter Form den Aufbau eines Wandlers nach der vorliegenden Erfindung. Darin ist ein Hochsetzsteller 1, der durch einen Synchronisations-Baustein 2 gesteuert und geregelt wird. Der folgende Block stellt einen Gegentaktwandler 3 dar, dessen rechteckige Ausgangsfrequenz in einem Resonanzkreis 4 sinusförmig geformt wird. Der darauffolgende Transformator 5 hat eine belastbare Sekundärwicklung, an der die sinusförmige Frequenz mit einer Zwischenspannung von ca. 48 Volt und ca. 50 kHz ansteht. Diese Spannung von ca. 48 Volt wurde bewusst als z.Z. geltende Grenze einer Schutzkleinspannung gewählt, so dass die Verteilung der Strompfade bei dieser Spannung ungefährlich und problemlos mit niedrigen Isolationsmitteln möglich ist. Von dem Transformator 5 erfolgt die Verteilung über Leitungen, die parallel ausgeführt sind und mit 6-0 bis 6-n bezeichnet sind, auf die einzelnen Übertrager-Bausteine 7-0 bis 7-n, die jeweils - und gewissermaßen individuell - eine einzige Entladungslampe 8-0 bis 8-n versorgen.

Fig. 2 zeigt einen Übertragerbaustein 7 im Detail. Kernstück ist der Transformator 7.1 der die Zwischenwechselspannung aus dem Transformator 5 in die jeweils für die spezielle Lampe 8-0 bis 8-n erforderliche Hochspannung transformiert. Im Ausgangskreis des Transformators ist jeweils ein Kondensator 9 angeordnet, der als kapazitiver Serien-Widerstand wirkt. Weiterhin liegt im Primärkreis des Transformator 7.1 ein optisch gesteuerter Triac 10, der seine Zündbefehle durch eine Zünd-LED 11 erhält, die wiederum durch den Steuerbaustein 12 gesteuert wird. Statt des Opto-Triacs 10 und der Steuer-LED 11 können auch andere Schaltmittel eingesetzt sein, so ist z.B. - nicht abgebildet - eine Gleichrichterbrücke und ein Thyristor oder eine entsprechende Halbleiterkombination möglich. Auch transformatorische Koppelungen des Steuerbefehls sind statt der LED-Opto-Kombination denkbar und möglich. Die Übertragerbausteine 7 bilden zusammen mit dem Transformator 7.1, dem Triac 10 und der Zünd-LED 11 eine Baueinheit, ein Modul, das in einer speziellen Ausformung als Bestandteil der Lampenfassung für jeweils eine Entladungslampe sein kann. Abgeschlossen wird die Anordnung in Figur 1 durch ein Helligkeitsmessmittel - hier ein Photowiderstand 13 - das einen Messwert der Helligkeit an den Auswertungsbaustein 14 gibt. Über eine Steuerleitung 15 können Einstellwerte für die Helligkeit in das System eingespeist werden. Die Befehle zur Veränderung der Helligkeit können manuell oder von einem übergeordneten System erfolgen.

Der Hochsetzsteller 1 wird aus einer Stromquelle - in diesem Beispiel aus der Bordspannung eines Kfz in einem Spannungsbereich von 8 - 18 Volt - betrieben und wandelt die Eingangsspannung zu einer stabilen ersten Zwischenspannung von ca. 60 Volt Gleichspannung. Stromquellen können natürlich beliebige Netz-, Batterie- oder Bordspannungen sein.

Gesteuert wird der Hochsetzsteller 1 durch den frequenzstabilen Synchronisationsbaustein 2 der auch die schwankenden Parameter: Eingangsspannung, Stromverbrauch (durch die Folgeschaltung) und die Temperatureinflüsse ausregelt.

In der zweiten Stufe - dem Gegentaktwandler 3 wird die Zwischenspannung, wieder frequenzstabil und synchron, in eine Wechselspannung gewandelt. Der Ausgang und die Funktion des Wandlers beruhen auf der Wirkung des abgestimmten Resonanzkreises 4, in dem die vorher steilen Schaltflanken zu einem sinusförmigen Verlauf der Frequenz gewandelt werden.

Die Belastung wird an den Resonanzwandlerkreis - bestehend aus 3,4 und 5 - niederohmig durch den Transformator 5 ausgekoppelt, dabei wird die Zwischenwechselspannung von ca. 48 Volt bei ca. 50 kHz auf die erforderliche Anzahl von Leitungen 6-0 bis 6-n parallel verteilt.

An jedem Endpunkt der Leitungen 6-0 bis 6-n steht an jedem Übertragerbaustein 7-0 bis 7-n diese Zwischenwechselspannung zur Verfügung. Die Wicklungsverhältnisse der Transformatoren 7.1 sind den Erfordernissen der jeweiligen Lampen 8-0 bis 8-n und deren Zündspannungen angepasst, so dass für jeden Lampentyp durchaus eine andere Spannung eingesetzt werden kann. Soll eine der Lampen 8-0 bis 8-n mit voller Helligkeit brennen, so erhält der jeweils dazugehörige Triac 10 durch die Zünd-LED 11 aus einem Steuerbaustein 12 synchron und exakt im Nulldurchgang der Zwischenwechselspannung einen Zündimpuls (diese Ansteuerung erfolgt einzeln und pro Lampe gesondert). Der Triac bleibt dann aufgrund seiner internen Funktion jeweils für die Dauer einer Halbwelle leitend und wird zur nächsten Halbwelle wieder neu gezündet. Solange der Triac leitend ist, liegt die Zwischenwechselspannung an dem Transformator 7-1 an.

Ist für eine Lampe oder für alle ein Abdunklungszustand gewünscht, oder durch die Betriebsverhältnisse erforderlich, so wird das Ein-/Ausschaltverhältnis im Rahmen einer Dimmfrequenz von ca. 50 Hz durch den Steuerbaustein 12 geschaltet, dabei sind Pulsblöcke von wenigen Sinus-Vollwellen im Rahmen von 1 : 1.000 möglich. Ein Verfahren dieses Art findet sich z. B. in der EP-A-04 39 240. Die Voraussetzungen für die optimale Zünd- und Brennspannung bleiben auf diese Art erhalten und die Funktion der Lampen ist gewährleistet. Dimm- oder Abdunklungserfordernisse können entweder durch den Benutzer allgemein über die Steuerleitung 15 eingeführt werden oder werden von den Istwert-Ergebnissen der Referenzmessung an 13 durch den Auswertungsbaustein 14 als Regelgröße aufbereitet und im Baustein 12 zu einem Pulspausen-Verhältnis umgesetzt.

Durch diese Art der Referenzüberwachung der Helligkeit einer - oder in einem anderen Ausführungsbeispiel auch aller Einzellampen - wird auch der Temperatureinfluss auf die Leuchtstärke der Lampen ausgeregelt; u.z. wird eine maximale (100 %ige) Einschaltdauer in die Nähe der niedrigst vorkommenden Temperatur und die dabei mögliche Helligkeit gelegt.

Bei allen anderen Temperaturen befinden sich dadurch die Lampen in einem mehr oder weniger abgedunkelten bzw. gedimmten Zustand. Dabei kommt der Konstruktion der große Dimmbereich zugute. Im Sekundärkreis der Hochspannungs-Transformatoren 7.1 ist jeweils in Serie zur Lampe 8 ein Kondensator 9 geschaltet; bis zur Zündung fließt in der Lampe kein nennenswerter Strom, so dass annähernd die volle Zündwechselspannung an der Lampe ansteht. Nach Einsetzen des Brennstromes fällt die Differenz zwischen Zünd- und Brennspannung über den Kondensator ab. Die Kondensatoren sind dem jeweiligen Strombedarf und der Brennspannung der Lampen angepasst.

## Patentansprüche

1. Verfahren zum Zünden und Betreiben von einer oder mehreren Kaltkathoden-Entladungslampen (8-0 bis 8-n), insbesondere Kaltkathoden-Leuchtstofflampen, in einem Kraftfahrzeug mit gleichen oder unterschiedlichen Zünd- und Brennspannungen, wobei die Kaltkathoden-Entladungslampen (8-0 bis 8-n) zusätzlich einzeln oder gemeinsam abgedunkelt oder gedimmt werden können, wobei eine Anpassung der Spannung aus der Spannungsquelle an die Spannung der Kaltkathoden-Entladungslampen (8-0 bis 8-n) in zwei Stufen erfolgt und die erste Stufe der Spannungsanpassung vor einer Verteilung der Strompfade auf die eine oder mehreren Kaltkathoden-Entladungslampen (8-0 bis 8-n) und die zweite Stufe der Spannungsanpassung nach der Verteilung der Strompfade auf die eine oder mehreren Kaltkathoden-Entladungslampen (8-0 bis 8-n) stattfindet **dadurch gekennzeichnet, dass**
- in der ersten Stufe aus einer beliebigen Spannungsquelle eine stabile Gleichspannung erzeugt wird, die in eine frequenz- und spannungsstabile Zwischenwechselspannung mit sinusförmiger Kurvenform umgeformt wird, wobei die Zwischenwechselspannung in einen Spannungsbereich gelegt wird, in dem die Verteilung auf mehrere voneinander getrennte Lampenorte ungefährlich und mit geringen Isolationsmitteln möglich ist und
- in der zweiten Stufe die Zwischenwechselspannung mit Hilfe eines oder mehrerer Übertragersysteme (7-0 bis 7-n) in unmittelbarer Nähe der einen oder mehreren Kaltkathoden-Entladungslampen (8-0 bis 8-n) auf die erforderliche Zünd- und Betriebsspannung der einen oder mehreren Kaltkathoden-Entladungslampen (8-0 bis 8-n) transformiert wird.

2. Verfahren nach Anspruch 1, **dadurch gekennzeichnet, dass** das bzw. die Übertragersysteme (7-0 bis 7-n) durch ein Signal aus einer Steuerschaltung (12), synchron mit der Zwischenwechselspannung, jeweils im Nulldurchgang der Zwischenwechselspannung eingeschaltet werden.

3. Verfahren nach Anspruch 1 und 2, **dadurch gekennzeichnet, dass** die über die Steuerschaltung (12) geregelte Einschaltdauer der Kaltkathoden-Entladungslampen (8-0 bis 8-n) frei wählbar und im Verhältnis zur Ausschaltpause veränderbar ist.

4. Verfahren nach Anspruch 1 bis 3, **dadurch gekennzeichnet, dass** die Einschaltung der Kaltkathoden-Entladungslampen (8-0 bis 8-n) durch die Steuerschaltung (12) störungsfrei - im Sinne der HF-Entstörung - jeweils im Nulldurchgang der Zwischenwechselspannung erfolgt und am Ende des Stromflusses nach jeder Halbwelle erlischt und neu eingeschaltet werden kann.

5. Verfahren nach Anspruch 2, **dadurch gekennzeichnet, dass** der Einschaltbefehl aus der Steuerschaltung (12) galvanisch getrennt an einen elektronischen Schalter gelangt.

6. Verfahren nach Anspruch 1, **dadurch gekennzeichnet, dass** der Abdunklungs- oder Dimmgrad einer oder aller Kaltkathoden-Entladungslampen (8-0 bis 8-n) manuell oder ferngesteuert geregelt wird.

7. Verfahren nach Anspruch 6, **dadurch gekennzeichnet, dass** der Abdunklungs- oder Dimmgrad in Abhängigkeit von der gemessenen Leuchtdichte einer oder aller Kaltkathoden-Entladungslampen (8-0 bis 8-n) geregelt wird.

8. Verfahren nach Anspruch 6 und 7, **dadurch gekennzeichnet, dass** die 100 %ige Ausleuchtung bei der niedrigsten Umgebungstemperatur erfolgt, so dass alle Ausleuchtungen bei höheren Temperaturen abgedunkelt bzw. gedimmt erscheinen.

9. Schaltungsanordnung zur Durchführung des Verfahrens nach einem oder mehreren der Ansprüche 1 bis 8, **dadurch gekennzeichnet, dass** die Schaltungsanordnung
- zur Durchführung der erste Stufe einen Hochsetzsteller (1), der durch einen Synchronisations-Baustein (2) geregelt und gesteuert wird, einen nachgeschalteten Gegentaktwandler (3), einen Resonanzkreis (4), der die rechteckige Ausgangsfrequenz des Gegentaktwandlers (3) sinusförmig formt, und einen darauffolgenden Transformator (5), an dessen belastbarer Sekundärwicklung die gewünschte Zwischenwechselspannung ansteht, und
- zur Durchführung der zweiten Stufe einen oder mehrere Übertrager (7-0 bis 7-n) mit jeweils einem Transformator als Kernstück
beinhaltet.

10. Schaltungsanordnung nach Anspruch 9, **dadurch gekennzeichnet, dass** zur Einschaltung elektronische Schalter aus einer Halbleiterkombination, die eine Gleichrichterbrücke und einen Thyristor oder einen Triac (10) bilden, verwendet werden.

11. Schaltungsanordnung nach Anspruch 9 zur Durchführung des Verfahrens nach Anspruch 5, **dadurch gekennzeichnet, dass** die galvanische Trennung durch einen Optokoppler (10, 11) erfolgt.

12. Schaltungsanordnung nach Anspruch 9 zur Durchführung des Verfahrens nach Anspruch 5, **dadurch gekennzeichnet, dass** die galvanische Trennung durch einen Pulstransformator erfolgt.

13. Schaltungsanordnung nach Anspruch 9, **dadurch gekennzeichnet, dass** der Übertrager (7-0 bis 7-n) mit dem Schalter und den Ansteuerbauteilen eine Baueinheit - ein Modul - bilden.

14. Schaltungsanordnung nach Anspruch 13, **dadurch gekennzeichnet, dass** die Module ein Teil der Lampenfassungen für die Kaltkathoden-Entladungslampen sind und mit diesen eine Einheit bilden.

## Claims

1. Method for starting and operating one or more cold-cathode discharge lamps (8-0 to 8-n), in particular cold-cathode fluorescent lamps, in a motor vehicle with the same or different starting and running voltages, it being possible, in addition, for the cold-cathode discharge lamps (8-0 to 8-n) to be dimmed individually or jointly, the voltage from the voltage source being adapted to the voltage of the cold-cathode discharge lamps (8-0 to 8-n) in two stages, and the first stage of the voltage adaptation taking place before a distribution of the current paths over the one or more cold-cathode discharge lamps (8-0 to 8-n), and the second stage of the voltage adaptation taking place after the distribution of the current paths over the one or more cold-cathode discharge lamps (8-0 to 8-n), **characterized in that**
- in the first stage there is generated from an arbitrary voltage source a stable DC voltage which is transformed into a frequency-stable and voltage-stable intermediate AC voltage with a sinusoidal wave-form, the intermediate AC voltage being positioned in a voltage range in which the distribution over a plurality of mutually separated lamp locations is safe and possible with modest insulating means, and
- in the second stage the intermediate AC voltage is transformed with the aid of one or more transformer systems (7-0 to 7-n) in the immediate vicinity of the one or more cold-cathode discharge lamps (8-0 to 8-n) into the required starting and running voltages of the one or more cold-cathode discharge lamps (8-0 to 8-n).

2. Method according to Claim 1, **characterized in that** the transformer system or systems (7-0 to 7-n) are switched on by a signal from a control circuit (12), this being done synchronously with the intermediate AC voltage and in each case at the zero crossing of the intermediate AC voltage.

3. Method according to Claims 1 and 2, **characterized in that** the ON period of the cold-cathode discharge lamps (8-0 to 8-n), which period is controlled via the control circuit (12), is freely selectable and can be varied in relation to the switch-off pause.

4. Method according to Claims 1 to 3, **characterized in that** the cold-cathode discharge lamps (8-0 to 8-n) are switched on by the control circuit (12) without interference - for the purpose of radio interference suppression - this being done in each case at the zero crossing of the intermediate AC voltage, and extinction and switching on again can be carried out at the end of the current flow after each half wave.

5. Method according to Claim 2, **characterized in that** the switch-on command from the control circuit (12) reaches an electronic switch in an electrically isolated fashion.

6. Method according to Claim 1, **characterized in that** the dimming level of one or all of the cold-cathode discharge lamps (8-0 to 8-n) is regulated manually or by remote control.

7. Method according to Claim 6, **characterized in that** the dimming level is regulated as a function of the measured luminance of one or all of the cold-cathode discharge lamps (8-0 to 8-n).

8. Method according to Claims 6 and 7, **characterized in that** 100% illumination takes place at the lowest ambient temperature, and so at higher temperatures all illuminations appear dimmed.

9. Circuit arrangement for carrying out the method according to one or more of Claims 1 to 8,
**characterized in that**
- in order to carry out the first stage the circuit arrangement includes a step-up controller (1), which is regulated and controlled by a synchronization module (2), a downstream push-pull converter (3), a resonant circuit (4), which forms the square-wave output frequency of the push-pull converter (3) sinusoidally, and a transformer (5) downstream thereof, at whose loadable secondary winding the desired intermediate AC voltage is present, and
- in order to carry out the second stage, the circuit arrangement includes one or more transforming units (7-0 to 7-n) each having a transformer as principal component.

10. Circuit arrangement according to Claim 9, **characterized in that** for switching on use is made of electronic switches from a semiconductor combination which is formed by a rectifier bridge and a thyristor or a triac (10).

11. Circuit arrangement according to Claim 9 for carrying out the method according to Claim 5, **characterized in that** the electrical isolation is performed by an optocoupler (10, 11).

12. Circuit arrangement according to Claim 9 for carrying out the method according to Claim 5, **characterized in that** the electrical isolation is performed by a pulse transformer.

13. Circuit arrangement according to Claim 9, **characterized in that** the transforming unit (7-0 to 7-n) forms a sub-assembly - a module - with the switch and the drive components.

14. Circuit arrangement according to Claim 13, **characterized in that** the modules are a part of the lamp holders for the cold-cathode discharge lamps and form a unit with the latter.

## Revendications

1. Procédé d'amorçage et d'alimentation d'une lampe ou de plusieurs lampes (8-0 à 8-n) à décharge à cathode froide, notamment de lampes fluorescentes à cathode froide, dans une véhicule automobile par des tensions d'amorçage et des tensions d'arc égales ou différentes, les lampes (8-0 à 8-n) à décharge à cathode froide pouvant être en outre assombries ou diaphragmées individuellement ou ensemble, une adaptation de la tension de la source de tension à la tension des lampes (8-0 à 8-n) à décharge à cathode froide s'effectuant en deux étapes et la première étape de l'adaptation de la tension ayant lieu avant une répartition des trajets de courant sur la lampe ou sur les plusieurs lampes (8-0 à 8-n) à décharge à cathode froide et la seconde étape de l'adaptation de la tension ayant lieu après les répartition des trajets de courant sur une lampe ou sur les plusieurs lampes (8-0 à 8-n) à décharge à cathode froide, **caractérisé en ce que**
- on produit dans la première étape à partir de n'importe quelle source de tension une tension continue stable, qui peut être transformée en une tension alternative intermédiaire stable en fréquence et en tension ayant une forme de courbe sinusoïdale, la tension alternative intermédiaire se trouvant dans une plage de tensions dans laquelle la répartition sur plusieurs lieux de lampe séparés les uns des autres est possible sans danger avec de faibles moyens d'isolation et
- on transforme dans la seconde étape la tension alternative intermédiaire à l'aide d'un système ou de plusieurs systèmes (7-0 à 7-n) transformateurs à proximité immédiate de ladite une lampe ou des plusieurs lampes (8-0 à 8-n) à décharge à cathode froide en la tension d'amorçage et d'alimentation de ladite une lampe ou des plusieurs lampes (8-0 à 8-n) à décharge à cathode froide qui est nécessaire.

2. Procédé suivant la revendication 1, **caractérisé en ce que** l'on branche le ou les systèmes (7-0 ) 7-n) transformateurs par un signal provenant d'un circuit (12) de commande en synchronisme avec la tension alternative intermédiaire respectivement au passage par zéro de la tension alternative intermédiaire.

3. Procédé suivant la revendication 1 ou 2, **caractérisé en ce que** la durée de mise sous tension régulée par le circuit (12) de commande des lampes (8-0 à 8-n) à décharge à cathode froide peut être choisie librement et peut être modifiée en relation avec l'intervalle de mise hors tension.

4. Procédé suivant la revendication 1 à 3, **caractérisé en ce que** l'on peut effectuer la mise sous tension des lampes (8-0 à 8-n) à décharge à cathode froide par le circuit (12) de commande sans défaut dans le sens du déparasitage HF respectivement au passage par zéro de la tension alternative intermédiaire et **en ce que** l'on peut les éteindre à la fin du passage du courant après chaque demi-onde et les remettre sous tension.

5. Procédé suivant la revendication 2, **caractérisé en ce que** l'ordre de mise sous tension parvient, d'une manière galvaniquement séparée, du circuit (12) de commande à un commutateur électronique.

6. Procédé suivant la revendication 1, **caractérisé en ce que** l'on règle manuellement ou de façon télécommandée le degré d'assombrissement ou de variation de la luminosité d'une lampe ou de toutes les lampes (8-0 à 8-n) à décharge à cathode froide.

7. Procédé suivant la revendication 6, **caractérisé en ce que** l'on règle le degré d'assombrissement ou de variation de la luminosité en fonction de la luminance mesurée d'une lampe ou de toutes les lampes (8-0 à 8-n) à décharge à cathode froide.

8. Procédé suivant la revendication 6 et 7, **caractérisé en ce que** l'on effectue l'éclairage à 100% à la température ambiante la plus basse, de sorte que tous les éclairages à des températures plus hautes apparaissent assombris ou diaphragmés.

9. Montage pour la mise en oeuvre du procédé suivant l'une ou plusieurs des revendications 1 à 8, **caractérisé**
- **en ce que** le montage comprend, pour la mise en oeuvre de la première étape un survolteur(1), qui est réglé et commandé par un composant (2) de synchronisation, un convertisseur (3) push-pull en aval, un circuit (4) de résonance, qui met sous une forme sinusoïdale la fréquence de sortie rectangulaire du convertisseur (3) push-pull et un transformateur (5) venant ensuite sur l'enroulement secondaire, qui peut être chargé, à partir duquel apparaît la tension alternative intermédiaire souhaitée et
- **en ce qu'**il comprend, pour effectuer la seconde étape, un transformateur ou plusieurs transformateurs (7-0 à 7-n) ayant respectivement un transformateur comme pièce essentielle.

10. Montage suivant la revendication 9, **caractérisé en ce qu'**il est utilisé pour la mise sous tension des commutateurs électroniques constitués d'une combinaison à semi-conducteur qui forme un pont redresseur et un thyristor ou un triac (10).

11. Montage suivant la revendication 9 pour la mise en oeuvre du procédé suivant la revendication 5, **caractérisé en ce que** la séparation galvanique s'effectue par un optocoupleur (10, 11).

12. Montage suivant la revendication 9 pour la mise en oeuvre du procédé suivant la revendication 5, **caractérisé en ce que** la séparation galvanique s'effectué par un transformateur d'impulsions.

13. Montage suivant la revendication 9, **caractérisé en ce que** le transformateur (7-0 à 7-n) forme avec le commutateur et les composants de commande une unité de construction, à savoir un module.

14. Montage suivant la revendication 13 **caractérisé en ce que** le module fait partie des douilles des lampes à décharge à cathode froide et forme avec elles une unité.
